(19) Europäisches Patentamt
European Patent Office
Office européen des brevets

(11) **EP 4 614 444 A1**

(12) **EUROPEAN PATENT APPLICATION**
published in accordance with Art. 153(4) EPC

(43) Date of publication:
**10.09.2025 Bulletin 2025/37**

(21) Application number: **23893884.9**

(22) Date of filing: **22.11.2023**

(51) International Patent Classification (IPC):
***G06T 7/73*** (2017.01)    ***G06T 7/80*** (2017.01)

(52) Cooperative Patent Classification (CPC):
**G06T 7/73; G01B 11/24; G06T 2207/10028;**
**G06T 2207/30244**

(86) International application number:
**PCT/CN2023/133185**

(87) International publication number:
**WO 2024/109796 (30.05.2024 Gazette 2024/22)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **25.11.2022 CN 202211489992**

(71) Applicant: **Hangzhou Shining Tianyuan 3D**
**Inspection**
**Technology Co., Ltd.**
**Hangzhou, Zhejiang 311258 (CN)**

(72) Inventors:
• **LI, Zhouqiang**
  **Hangzhou, Zhejiang 311258 (CN)**
• **LI, Renju**
  **Hangzhou, Zhejiang 311258 (CN)**
• **LIANG, Baoqiu**
  **Hangzhou, Zhejiang 311258 (CN)**
• **LI, Zhongping**
  **Hangzhou, Zhejiang 311258 (CN)**

(74) Representative: **Grünecker Patent- und**
**Rechtsanwälte**
**PartG mbB**
**Leopoldstraße 4**
**80802 München (DE)**

(54) **METHOD AND APPARATUS FOR DETECTING POSE OF SCANNING HEAD, DEVICE, AND MEDIUM**

(57)    Embodiments of the present disclosure relate to a method and apparatus for detecting the pose of a scanning head, a device and a medium. The method comprises: performing tracking scanning processing for marker points on an outer frame of a scanning head based on N tracking cameras to obtain three-dimensional coordinates of at least three valid marker points, wherein N is a positive integer greater than 2; and performing calculation based on the three-dimensional coordinates of the at least three valid marker points and reference coordinates of each valid marker point in a frame coordinate system to obtain a rotation matrix and a translation vector for transforming a scanner coordinate system to a tracker coordinate system. By means of the technical solution above, a positional relationship between a scanning head coordinate system and a tracker coordinate system is calculated based on marker point data acquired by more than two tracking cameras, thereby improving the positioning precision and stability of the pose of a scanning head by a tracker, as well as the overall measurement precision of a scanning measurement system of the tracker.

```
┌─────────────────────────────────────────────┐
│ Perform tracking scanning processing for     │  S101
│ marker points on an outer frame of a scanning │
│ head based on N tracking cameras to obtain    │
│ three-dimensional coordinates of at least     │
│ three valid marker points, wherein N is a     │
│ positive integer greater than 2               │
└─────────────────────────────────────────────┘
                      │
                      ▼
┌─────────────────────────────────────────────┐
│ Perform calculation based on the three-       │  S102
│ dimensional coordinates of the at least three │
│ valid marker points and reference coordinates │
│ of each valid marker point in a frame         │
│ coordinate system to obtain a rotation matrix │
│ and a translation vector for transforming a   │
│ scanner coordinate system to a tracker        │
│ coordinate system                             │
└─────────────────────────────────────────────┘
```

**Fig. 1**

## Description

The present disclosure claims priority to Chinese Patent Application No. 202211489992.X, filed to the China National Intellectual Property Administration on November 25, 2022 and entitled "Method and Apparatus for Detecting Pose of Scanning Head, Device and Medium", which is incorporated herein by reference in its entirety.

## Technical Field

The present disclosure relates to the field of scanning processing technologies, and in particular to a method and apparatus for detecting the pose of a scanning head, a device and a medium.

## Background

In related art, the tracking scanning measurement method mainly includes the real-time tracking and positioning of a scanning head by a tracker, the scanning measurement of the scanning head, and the unification of the coordinate system of scanning measurement data. The scanning measurement precision of the scanning head can be maintained at a high level, and the unification of the coordinate system of the scanning data mainly depends on the real-time positioning precision of the scanning head by the tracker. Therefore, the final scanning precision is directly determined by the tracking and positioning precision of the scanning head by the tracker.

Since scanning measurement systems of trackers are often used in the three-dimensional topography measurement of large-size workpieces, the baseline distance between binocular cameras constituting a tracker is usually relatively long. When performing pose detection of a scanning head, the binocular cameras of the tracker have a significant difference in photographing angles of the scanning head. Marker points attached to an outer frame of the scanning head cannot simultaneously achieve good imaging quality on both cameras. Therefore, this makes it difficult to ensure the positioning precision and stability of the pose of a scanning head, ultimately affecting the measurement precision of the tracking scanning measurement system.

## Summary

In order to solve or at least partially solve the technical problem above, the present disclosure provides a method and apparatus for detecting the pose of a scanning head, a device and a medium.

Embodiments of the present disclosure provide a method for detecting the pose of a scanning head, the method including:

performing tracking scanning processing for marker points on an outer frame of a scanning head based on N tracking cameras to obtain three-dimensional coordinates of at least three valid marker points, wherein N is a positive integer greater than 2; and

performing calculation based on the three-dimensional coordinates of the at least three valid marker points and reference coordinates of each valid marker point in a frame coordinate system to obtain a rotation matrix and a translation vector for transforming a scanner coordinate system to a tracker coordinate system.

Embodiments of the present disclosure further provide an apparatus for detecting the pose of a scanning head, the apparatus including:

a scanning processing component, configured to perform tracking scanning processing for marker points on an outer frame of a scanning head based on N tracking cameras to obtain three-dimensional coordinates of at least three valid marker points, wherein N is a positive integer greater than 2; and

a calculation component, configured to perform calculation based on the three-dimensional coordinates of the at least three valid marker points and reference coordinates of each valid marker point in a frame coordinate system to obtain a rotation matrix and a translation vector for transforming a scanner coordinate system to a tracker coordinate system.

Embodiments of the present disclosure further provide an electronic device, including: a processor; and a memory configured to store processor-executable instructions. The processor is configured to read the executable instructions from the memory and execute the instructions to implement the method for detecting the pose of a scanning head provided according to the embodiments of the present disclosure.

Embodiments of the present disclosure further provide a computer-readable storage medium in which a computer program is stored, wherein the computer program is configured to execute the method for detecting the pose of a scanning head provided according to the embodiments of the present disclosure.

Compared with the prior art, the technical solution provided in the embodiments of the present disclosure has the following advantages: in the solution for detecting the pose of a scanning head provided in the embodiments of the present disclosure, tracking scanning processing is performed on marker points on an outer frame of a scanning head based on N tracking cameras to obtain three-dimensional coordinates of at least three valid marker points, wherein N is a positive integer greater than 2; and calculation is performed based on the three-dimensional coordinates of the at least three valid marker points and reference coordinates of each valid marker point in a frame coordinate system to obtain a rotation matrix and a translation vector for transforming a scanner coordinate system to a tracker coordinate system. By means of the technical solution, the positional relationship between a scanning head coordinate system and a tracker coordinate system is calculated based on marker point data acquired by more than two tracking cameras, thereby improving the positioning precision and stability of the pose of a scanning head by a tracker, as well as the overall measurement precision of a scanning measurement system of the tracker.

It should be understood that both the foregoing general description and the following detailed description are exemplary and explanatory only, but cannot be understood as limitation to the present disclosure.

## Brief Description of the Drawings

The accompanying drawings herein, which are incorporated in the description and constitute a part of the description, illustrate embodiments of the present disclosure, and together with the description to explain the principle of the present disclosure.

In order to describe the technical solutions in the embodiments of the present disclosure or in the related art more clearly, hereinafter, accompanying drawings requiring to be used for describing the embodiments or the related art are introduced briefly. Apparently, for a person of ordinary skill in the art, other accompanying drawings can also be obtained according to these accompanying drawings without involving any inventive effort.

Fig. 1 is a schematic flowchart of a method for detecting the pose of a scanning head provided according to embodiments of the present disclosure;

Fig. 2 is a schematic flowchart of another method for detecting the pose of a scanning head provided according to embodiments of the present disclosure;

Fig. 3 is a schematic diagram of a multi-view tracking camera provided according to embodiments of the present disclosure;

Fig. 4 is a schematic structural diagram of an apparatus for detecting the pose of a scanning head provided according to embodiments of the present disclosure; and

Fig. 5 is a schematic structural diagram of an electronic device provided according to embodiments of the present disclosure.

## Detailed Description of the Embodiments

Hereinafter, embodiments of the present disclosure are described in further detail with reference to the accompanying drawings. Although certain embodiments of the present disclosure are shown in the drawings, it should be understood that the present disclosure may be implemented in various forms and should not be construed as being limited to the embodiments set forth herein, but rather these embodiments are provided for a more thorough and complete understanding of the present disclosure. It should be understood that the drawings and embodiments of the present disclosure are only for illustrative purposes and are not intended to limit the scope of the present disclosure.

It should be understood that, the steps recorded in the method embodiments of the present disclosure may be executed in different orders, and/or executed in parallel. Furthermore, method embodiments may include additional steps and/or omit the steps shown. The scope of the present disclosure is not limited in this respect.

As used herein, the term "include" and variations thereof are open-ended, i.e., "including but not limited to". The term "based on" refers to "based at least in part on". The term "one embodiment" refers to "at least one embodiment"; the term "another embodiment" refers to "at least one further embodiment"; and the term "some embodiments" refers to "at least some embodiments". Relevant definitions of other terms will be given in the following description.

It should be noted that, the concepts such as "first" and "second" mentioned in the present disclosure are only used to distinguish different apparatuses, components, or units, but are not used to limit the sequence or dependency of functions performed by these apparatuses, components, or units.

It should be noted that the modifications of "a/an" and "a plurality of" mentioned in the present disclosure are illustrative rather than restrictive, and a person skilled in the art should understand that these modifications should be understood as "one or more", unless the context clearly indicates otherwise.

The names of messages or information exchanged between a plurality of apparatuses in the embodiments of the present disclosure are only for illustrative purposes, and are not intended to limit the scope of these messages or information.

Alternatively, a tracking scanning measurement system based on a multi-view camera consists of a tracker including a multi-view camera and a scanning head based on structured light measurements. The implementation process of the tracking scanning measurement involves the real-time detection of marker points on an outer frame of the scanning head by the tracker, enabling real-time detection of the pose of the scanning head. This allows the structured light measurement data of the scanning head at the same moment to be unified into the tracker coordinate system, thereby completing the scanning measurement of the object to be measured.

In order to address the problem of the low precision and stability of scanning measurement using the current tracking scanning measurement method and apparatus based on a binocular camera, the method for detecting the pose of a scanning head in the embodiments of the present disclosure designs a tracking positioning apparatus based on a multi-view camera (more than two cameras) and a tracking positioning method based on a multi-view camera, and calculates a positional relationship between a scanning head coordinate system and a tracker coordinate system based on marker point data acquired by more than two tracking cameras, thereby improving the positioning precision and stability of the pose of a scanning head by a tracker, as well as the overall measurement precision of a scanning measurement system of the tracker.

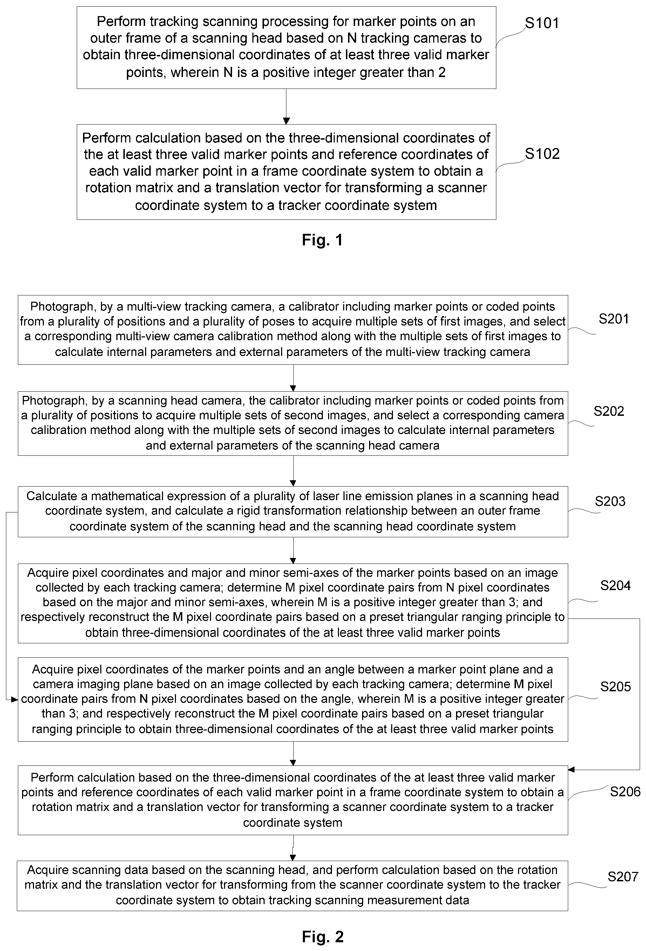

Fig. 1 is a schematic flowchart of a method for detecting the pose of a scanning head provided by embodiments of the present disclosure. The method may be executed by an apparatus for detecting the pose of a scanning head. The apparatus may be implemented by software and/or hardware, and may be generally integrated in an electronic device. As shown in Fig. 1, the method includes:

step 101, tracking scanning processing is performed on marker points on an outer frame of a scanning head based on N tracking cameras to obtain three-dimensional coordinates of at least three valid marker points, wherein N is a positive integer greater than 2.

N may be a positive integer greater than 2 according to application scenario requirements, for example, three tracking cameras. The number of valid marker points with three-dimensional coordinates must be at least three to calculate the rotation matrix and the translation vector for transforming the scanner coordinate system to the tracker coordinate system.

In the embodiments of the present disclosure, when the multi-view tracking camera detects the pose of the scanning head, the three-dimensional coordinates of the valid marker points are acquired by acquiring the marker points (e.g., circular reflection marker points) attached on the outer frame of the scanning head and performing operations such as recognition, positioning and reconstruction on the marker points.

In the embodiments of the present disclosure, when the multi-view tracking camera detects the pose of the scanning head, marker points detected by at least two tracking cameras of the multi-view tracking camera are valid marker points, the number of the valid marker points is at least three, and a positional relationship between a scanning head coordinate system and a tracker coordinate system can be calculated by means of the marker points.

In the embodiments of the present disclosure, there are many methods for performing tracking scanning processing for marker points on an outer frame of a scanning head based on N tracking cameras to obtain three-dimensional coordinates of at least three valid marker points. In some embodiments, pixel coordinates and major and minor semi-axes of the marker points are acquired based on an image collected by each tracking camera; M pixel coordinate pairs are determined from N pixel coordinates based on the major and minor semi-axes, wherein M is a positive integer greater than 3; and the M pixel coordinate pairs are reconstructed respectively based on a preset triangular ranging principle to obtain three-dimensional coordinates of at least three valid marker points.

In other some embodiments, pixel coordinates of marker points and an angle between a marker point plane and a camera imaging plane are acquired based on an image collected by each tracking camera; M pixel coordinate pairs are determined from N pixel coordinates based on the angle, wherein M is a positive integer greater than 3; and the M pixel coordinate pairs are reconstructed respectively based on a preset triangular ranging principle to obtain three-dimensional coordinates of at least three valid marker points.

Step 102: calculation is performed based on the three-dimensional coordinates of the at least three valid marker points and reference coordinates of each valid marker point in a frame coordinate system to obtain a rotation matrix and a translation vector for transforming a scanner coordinate system to a tracker coordinate system.

The reference coordinates of each valid marker point in the frame coordinate system refer to coordinate information of the valid marker point in the frame coordinate system.

In the embodiments of the present disclosure, there are many methods for performing calculation based on the three-dimensional coordinates of the at least three valid marker points and the reference coordinates of each valid marker point in the frame coordinate system to obtain a rotation matrix and a translation vector for transforming a scanner coordinate system to a tracker coordinate system, for example, a rotation matrix and a translation vector for transforming a scanner coordinate system to a tracker coordinate system are calculated by using OpenCVSharp three-dimensional points. What methods are specifically selected according to application scenarios.

In the solution of detecting the pose of a scanning head provided in the embodiments of the present disclosure, tracking scanning processing is performed on marker points on an outer frame of a scanning head based on N tracking cameras to obtain three-dimensional coordinates of at least three valid marker points, wherein N is a positive integer greater than 2; and calculation is performed based on the three-dimensional coordinates of the at least three valid marker points and reference coordinates of each valid marker point in a frame coordinate system to obtain a rotation matrix and a translation vector for transforming a scanner coordinate system to a tracker coordinate system. By means of the technical solution above, the positional relationship between a scanning coordinate system and a tracker coordinate system is calculated based on marker point data acquired by more than two tracking cameras, thereby improving the positioning precision and stability of the pose of a scanning head by a tracker, and the overall measurement precision of a scanning measurement system of the tracker.

Fig. 2 is a schematic flowchart of another method for detecting the pose of a scanning head provided by embodiments of the present disclosure. On the basis of the embodiments above, the present embodiment further optimizes the method for detecting the pose of a scanning head. As shown in Fig. 2, the method includes:

step 201, a calibrator including marker points or coded points is photographed by a multi-view tracking camera from a plurality of positions and a plurality of poses to acquire multiple sets of first images, and a corresponding multi-view camera calibration method is selected along with the multiple sets of first images to calculate internal and external parameters of the multi-view tracking camera.

Alternatively, in the embodiments of the present disclosure, a tracker of a multi-view camera is used to detect the pose of a scanning head with high precision and stability, so as to achieve tracking scanning measurement with high precision and stability.

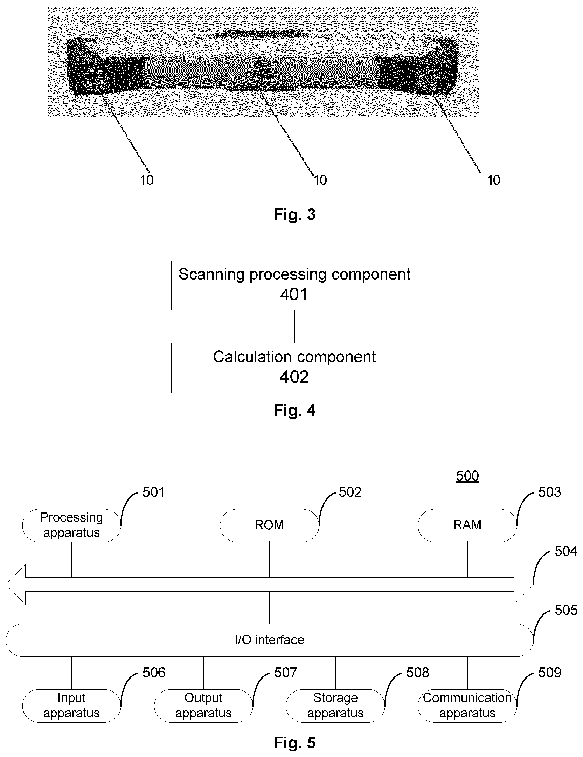

Exemplarily, the multi-view tracking camera for performing tracking scanning measurement consists of three tracking cameras 10 as shown in Fig. 3.

Alternatively, the calibration of a multi-view tracker is mainly performed on internal and external parameters of the multi-view tracking camera, and the calibration parameters mainly include the internal parameter $K_i$, $(i = 0, 1, ..., N - 1)$ of the multi-view tracking camera and the external parameter $R_i t_i$, $(i = 0, 1, ..., N - 1)$ of the multi-view tracking camera. The process may acquire multiple sets of images by photographing a calibrator (a standard instrument including marker points or coded points) from multiple positions and poses, and select a corresponding calibration method for the multi-view tracking camera (for example, using a 4-point straight bar or a 11-point straight bar to calibrate the multi-view tracking camera, or using a large range of marble planes to calibrate the multi-view tracking camera) to calculate internal and external parameters of the multi-view tracking camera.

Step 202, the calibrator including marker points or coded points is photographed by a scanning head camera from a plurality of positions to acquire multiple sets of second images, and a corresponding camera calibration method is selected along with the multiple sets of second images to calculate internal and external parameters of the scanning head camera.

Step 203, a mathematical expression of a plurality of laser line emission planes in the scanning head coordinate system is calculated, and a rigid transformation relationship between an outer frame coordinate system of the scanning head and the scanning head coordinate system is calculated.

Alternatively, the calibration of a scanning head system mainly includes calibration of internal and external parameters of a scanning head camera and calibration of laser lines of the scanning head. The calibration of internal and external parameters of the scanning head camera can acquire multiple sets of second images by photographing a calibrator from a plurality of positions, and a corresponding camera calibration method is selected along with the multiple sets of second images to calculate internal and external parameters of the scanning head camera.

Alternatively, the calibration of laser lines of the scanning head is to calculate mathematical expressions of a plurality of laser line emission surfaces in the scanning head coordinate system, i.e. the mathematical expressions of the laser surface can be expressed by using a plane equation and a quadratic surface equation according to the characteristics of the laser surface. The plane equation is as shown in formula (1), and the quadratic surface equation is as shown in formula (2):

$$ax + by + cz + d = 0 \quad (1)$$

$$Ax^2 + By^2 + Cz^2 + Dxy + Exz + Fyz + Gx + Hy + Iz + J = 0 \quad (2)$$

wherein a, b, c and d are plane equation parameters, (x, y, z) are three-dimensional point coordinates; and A, B, C, D, E, F, G, H, I and J are quadratic surface equation parameters.

Alternatively, a rigid transformation relationship between the outer frame coordinate system of the scanning head and the scanning head coordinate system is calculated, i.e. hand-eye calibration, i.e. a transformation relationship between the scanning head coordinate system $P_{scan}$ and the externally-connected frame coordinate system $P_{Frame}$, as shown in formula (3):

$$P_{Scan} = R * P_{Frame} + t \quad (3)$$

wherein, $P_{scan}$ is coordinates of point cloud in the scanning head coordinate system, $P_{Frame}$ is coordinates of the point cloud in the frame coordinate system, and R and t are a rotation matrix and a translation vector for transforming from the frame coordinate system to the scanning head coordinate system.

It can be understood that, the execution order of step 201 to step 203 may be set selectively according to application scenario requirements.

Step 204, pixel coordinates and major and minor semi-axes of marker points are acquired based on an image acquired by each tracking camera; M pixel coordinate pairs are determined from N pixel coordinates based on the major and minor semi-axes, wherein M is a positive integer greater than 3; and reconstruction is performed on the M pixel coordinate pairs respectively based on a preset triangular ranging principle to obtain three-dimensional coordinates of at least three valid marker points.

Step 205, pixel coordinates of the marker points and an angle between a marker point plane and a camera imaging plane based on an image acquired by each tracking camera; M pixel coordinate pairs is determined from the N pixel coordinates based on the angle, wherein M is a positive integer greater than 3; and reconstruction is performed on the M pixel coordinate pairs respectively based on a preset triangular ranging principle to obtain three-dimensional coordinates of at least three valid marker points.

It should be noted that step 201 or step 202 may be performed after step 203, and the execution order of step 201 to step 202 may be determined according to an actual situation. Fig. 2 is only an example.

Step 206: calculation is performed based on the three-dimensional coordinates of the at least three valid marker points and reference coordinates of each valid marker point in a frame coordinate system to obtain a rotation matrix and a translation vector for transforming a scanner coordinate system to a tracker coordinate system.

Step 207: scanning data is acquired based on the scanning head, and calculation is performed based on the scanning data, and the rotation matrix and the translation vector for transforming from the scanner coordinate system to the tracker coordinate system to obtain tracking scanning measurement data.

Alternatively, when a multi-view tracking camera detects the pose of a scanning head, marker points detected by at least two cameras of the multi-view tracking camera are valid marker points, the number of the valid marker points is at least three, and a positional relationship between a scanning head coordinate system and a tracker coordinate system can be calculated by means of the marker points, as shown in formula (4):

$$P_{Tracker} = R_{FS} * P_{Scan} + t_{FS} \quad (4)$$

wherein $P_{Tracker}$ is the coordinates of the point cloud in the tracker coordinate system, and $R_{FS}$ and $t_{FS}$ are the rotation matrix and the translation vector for transforming the scanner coordinate system to the tracker coordinate system.

Alternatively, when detecting the pose of the scanning head, the multi-view tracking camera acquires the three-dimensional coordinates of the marker points by collecting the marker points attached to the outer frame of the scanning head and performing operations such as recognition, positioning and reconstruction on the marker points. The information about the marker points mainly includes pixel coordinates $(u_i, v_i)$, i = 0,1,2 ... N - 1 of the centers (e.g., the center of a circle) on an image acquired by each camera, major and minor semi-axes $(a_i, b_i)$, i = 0,1,2 ... N - 1 (N is the number of cameras), three-dimensional coordinates P(x, y, z), and a unit normal vector $N(n_x, n_y, n_z)$ of a plane where the centers are located.

Generally, if the pixel coordinates $(u_i, v_i)$, i = 0,1 of the marker points in two images are known, the three-dimensional coordinates of the current marker point may be acquired according to a triangular ranging principle. The multi-view camera can select an optimal camera reconstruction combination according to the angle $\alpha_i$, i = 0,1,2 ... N - 1 between the marker point plane and the camera imaging plane (for example, selecting a camera combination reconstruction with a smaller angle), or the reconstruction may be performed according to a camera combination with the ratio $\beta_i = a_i/b_i$, i = 0,1,2 ... N - 1 of major to minor axis in the reflective marker point images being close to 1 or smaller, improving the reliability and precision of the reconstruction of the reflective marker points, and ensuring the positioning precision of the pose of a scanning head by the tracker.

Further, in the case where the calibration of the scanning head is complete, point cloud data for structured light reconstruction at the current position is calculated, and the coordinate systems of the measurement data are aligned, that is, the acquired measurement data is transformed into the tracker coordinate system by means of the pose of a scanning head acquired in formula (4).

Further, point cloud post-processing is performed, for example, processing such as point cloud optimization and meshing is performed on the scanning measurement data in the tracker coordinate system, and the data result is output.

Thus, the calibration of a multi-view tracking scanning measurement system, the coordinate alignment of single-frame scanning data (a real-time scanning measurement process), and the processing and exporting of point cloud data can be achieved.

The method for detecting the pose of a scanning head in the embodiments of the present disclosure can ensure the positioning precision and stability of the scanning head by means of tracking and positioning based on a multi-view tracking camera (more than two cameras), thereby obtaining a higher quality scanning measurement data result, and effectively solving the problem of low measurement precision of a traditional binocular camera-based tracking scanning system. In addition, the effective field-of-view region for tracking and positioning the scanning head is increased, and the working efficiency is improved.

Fig. 4 is a schematic structural diagram of an apparatus for detecting the pose of a scanning head provided by embodiments of the present disclosure. The apparatus may be implemented by software and/or hardware, and may be generally integrated in an electronic device. As shown in Fig. 4, the apparatus includes:

a scanning processing component 401, configured to perform tracking scanning processing for marker points on an outer frame of a scanning head based on N tracking cameras to obtain three-dimensional coordinates of at least three valid marker points, wherein N is a positive integer greater than 2; and

a calculation component 402, configured to perform calculation based on the three-dimensional coordinates of the at least three valid marker points and the reference coordinates of each valid marker point in a frame coordinate system to obtain a rotation matrix and a translation vector for transforming a scanner coordinate system to a tracker coordinate system.

Alternatively, the scanning processing component 401 is specifically configured to:

acquire pixel coordinates and major and minor semi-axes of the marker points based on an image acquired by each tracking camera;

determine M pixel coordinate pairs from N pixel coordinates based on the major and minor semi-axes, wherein M is a positive integer greater than 3; and

respectively reconstruct the M pixel coordinate pairs based on a preset triangular ranging principle to obtain three-dimensional coordinates of the at least three valid marker points.

Alternatively, the scanning processing component 401 is specifically configured to:

acquire pixel coordinates of the marker points and an angle between a marker point plane and a camera imaging plane based on the image acquired by each tracking camera;

determine M pixel coordinate pairs from N pixel coordinates based on the angle, wherein M is a positive integer greater than 3; and

respectively reconstruct the M pixel coordinate pairs based on a preset triangular ranging principle to obtain three-dimensional coordinates of the at least three valid marker points.

Alternatively, the apparatus further includes:

an acquisition component, configured to acquire scanning data based on the scanning head; and

a processing component, configured to perform calculation based on the scanning data and the rotation matrix and the translation vector for transforming from the scanner coordinate system to the tracker coordinate system to obtain tracking scanning measurement data.

Alternatively, the apparatus further includes calibration component, configured to:

photograph, by the N tracking cameras, a calibrator including marker points or coded points from a plurality of positions and a plurality of poses to acquire multiple sets of first images, and select corresponding N camera calibration methods along with the multiple sets of first images to calculate internal and external parameters of the N tracking cameras;

photograph, by a scanning head camera, the calibrator including marker points or coded points from a plurality of positions to acquire multiple sets of second images, and select a corresponding camera calibration method along with the multiple sets of second images to calculate internal and external parameters of the scanning head camera;

calculate a mathematical expression of a plurality of laser line emission planes in a scanning head coordinate system; and

calculate a rigid transformation relationship between an outer frame coordinate system of the scanning head and the scanning head coordinate system.

The apparatus for detecting the pose of a scanning head provided in the embodiments of the present disclosure can execute the method for detecting the pose of a scanning head provided in any embodiment of the present disclosure, and includes corresponding functional components for executing a method and can achieve the beneficial effects.

Embodiments of the present disclosure further provide a computer program product, including a computer program/instruction, which when executed by a processor, implement the method for detecting the pose of a scanning head provided in any embodiment of the present disclosure.

Fig. 5 is a schematic structural diagram of an electronic device provided according to embodiments of the present disclosure. Referring now to Fig. 5, there is shown a schematic structural diagram of an electronic device 500 suitable for implementing embodiments of the present disclosure. The electronic device 500 in embodiments of the present disclosure may include, but is not limited to, a mobile terminal such as a mobile phone, a laptop computer, a digital broadcast receiver, a PDA (Personal Digital Assistant), a PAD (tablet computer), a PMP (Portable Multimedia Player), and a vehicle-mounted terminal (e.g. vehicle-mounted navigation terminal), and a fixed terminal such as a digital TV and a desktop computer. The electronic device shown in Fig. 5 is only an example, and should not limit the functions and use scopes of embodiments of the present disclosure.

As shown in Fig. 5, the electronic device 500 includes a processing apparatus (e.g. a central processing unit, a graphics processing unit, etc.) 501 which can perform various suitable actions and processes in accordance with a program stored in a Read Only Memory (ROM) 502 or a program loaded from a storage apparatus 508 into a Random Access Memory (RAM) 503. In the RAM 503, various programs and data necessary for the operations of the electronic device 500 are also stored. The processing apparatus 501, the ROM 502, and the RAM 503 are connected to each other via a bus 504. An Input/Output (I/O) interface 505 is also connected to the bus 504.

In general, the following apparatuses may be connected to the I/O interface 505: an input apparatus 506 including, for example, a touch screen, a touch pad, a keyboard, a mouse, a camera, a microphone, an accelerometer, a gyroscope, etc.; an output apparatus 507 including, for example, a Liquid Crystal Display (LCD), a speaker, a vibrator, etc.; a storage apparatus 508 including, for example, a magnetic tape, a hard disk, etc.; and a communication apparatus 509. The communication apparatus 509 can allow the electronic device 500 to wirelessly or wired communicate with other devices to exchange data. While Fig. 5 illustrates the electronic device 500 provided with a variety of apparatuses, it should be understood that not all of the illustrated apparatuses are required to be implemented or provided. More or fewer apparatuses may alternatively be implemented or provided.

Alternatively, the processes described above with reference to the flowcharts can be implemented as computer software programs in accordance with the embodiments of the present disclosure. For example, embodiments of the present disclosure include a computer program product including a computer program carried on a non-transitory computer-readable medium. The computer program includes program codes for executing the method as shown in the flowchart. In such embodiments, the computer program may be downloaded and installed from the network via the communication apparatus 509, or installed from the storage apparatus 508, or installed from the ROM 502. When the computer program is executed by the processing apparatus 501, the described functions defined in the method for detecting the pose of a scanning head of the embodiments of the present disclosure are executed.

It should be noted that the computer-readable medium described in the present disclosure may be a computer-readable signal medium or a computer-readable storage medium, or any combination thereof. The computer-readable storage medium may be, for example, but not limited to, an electronic, magnetic, optical, electromagnetic, infrared, or semiconductor system, apparatus, or device, or any combination thereof. More specific examples of the computer-readable storage medium may include, but not limited to: an electrical connection having one or more conductive wires, a portable computer disk, a hard disk, a Random Access Memory (RAM), a Read-Only Memory (ROM), an Erasable Programmable Read-Only Memory (EPROM or Flash memory), an optical fiber, a portable Compact Disc Read-Only Memory (CD-ROM), an optical storage device, a magnetic storage device, or any suitable combination thereof. In the present disclosure, the computer-readable storage medium may be any tangible medium that can contain or store a program, which can be used by or used in connection with an instruction execution system, apparatus, or device. While in the present disclosure, the computer-readable signal medium may include a data signal carrying computer-readable program codes which is propagated in a baseband or propagated as a part of a carrier wave. Such a propagated data signal may take a plurality of forms, including, but not limited to, electromagnetic signal, optical signal, or any suitable combination thereof. The computer-readable signal medium may also be any computer-readable medium other than a computer-readable storage medium, and the computer-readable storage medium can send, propagate or transmit a program for use by an instruction execution system, apparatus, or device or for use in combination therewith. The program codes included in the computer-readable medium may be transmitted via any suitable medium, including but not limited to electric wire, optical cable, Radio Frequency (RF), etc., or any suitable combination thereof.

In some embodiments, clients and servers can communicate using any currently known or future developed network protocol such as Hyper Text Transfer Protocol (HTTP), and can be interconnected with digital data communication (e.g., a communication network) in any form or medium. Examples of communication networks include a Local Area Network ("LAN"), a Wide Area Network ("WAN"), an Internet work (e.g., Internet), and a peer-to-peer network (e.g., an ad hoc peer-to-peer network), as well as any currently known or future developed network.

The described computer-readable medium may be included in the described electronic device, and may also exist separately and not be installed in the electronic device.

The described computer-readable medium carries one or more programs, and when the one or more programs are executed by the electronic device, the electronic device is enabled to: perform tracking scanning processing for marker points on an outer frame of a scanning head based on N tracking cameras to obtain three-dimensional coordinates of at least three valid marker points, wherein N is a positive integer greater than 2; and perform calculation based on the three-dimensional coordinates of the at least three valid marker points and reference coordinates of each valid marker point in a frame coordinate system to obtain a rotation matrix and a translation vector for transforming a scanner coordinate system to a tracker coordinate system.

Computer program codes for performing operations of the present disclosure may be written by one or more programming languages or any combination thereof; the programming languages include, but not limited to, object-oriented programming languages, such as Java, Smalltalk and C++, and conventional procedural programming languages, such as the "C" programming language or similar programming languages. The program code may be executed entirely on the user's computer, partially on the user's computer, as a stand-alone software package, partially on the user's computer and partially on a remote computer, or entirely on the remote computer or server. In the latter scenario, the remote computer may be connected to the user's computer via any type of network, including a Local Area Network (LAN) or a Wide Area Network (WAN), or may be connected to an external computer (e.g., via the Internet using an Internet Service Provider).

The flowcharts and block diagrams in the drawings illustrate the system architecture, functionality, and operation of possible implementations of systems, methods and computer program products according to various embodiments of the present disclosure. In this regard, each block in the flowcharts or block diagrams may represent a part of a component, a program segment, or a code, and the part of a component, a program segment, or a code includes one or more executable instructions for implementing a specified logic function. It should also be noted that in some alternative implementations, the functions labeled in the blocks may occur in sequences different from those labeled in the accompanying drawings. For example, two continuous blocks may, in fact, be executed substantially concurrently, or may sometimes be executed in an opposite order, depending on the functions involved. It will also be noted that each block in the block diagrams and/or flowcharts, and combinations of blocks in the block diagrams and/or flowcharts can be implemented by special-purpose hardware-based systems that perform specified functions or operations, or implemented by combinations of special-purpose hardware and computer instructions.

The units described in the embodiments of the present disclosure may be implemented by means of software, or may be implemented by means of hardware. The names of the units do not, in certain cases, constitute a limitation on the units themselves.

The functions described herein above may be performed, at least in part, by one or more hardware logic components. For example, without limitation, exemplary types of hardware logic components that can be used include Field-programmable Gate Arrays (FPGAs), Application-Specific Integrated Circuits (ASICs), Application-Specific Standard Products (ASSPs), System-On-a-Chip systems (SOCs), Complex Programmable Logic Devices (CPLDs), etc.

In the context of the present disclosure, a machine-readable medium may be tangible media that may include or store a program for use by or in combination with an instruction execution system, apparatus, or device. The machine-readable medium may be a machine-readable signal medium or a machine-readable storage medium. The machine-readable medium may include, but not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a Random Access Memory (RAM), a Read-Only Memory (ROM), an Erasable Programmable Read-Only Memory (EPROM or Flash memory), an optical fiber, a portable Compact Disc Read-Only Memory (CD-ROM), an optical storage device, a magnetic storage device, or any suitable combination thereof.

According to one or more embodiments of the present disclosure, provided is an electronic device, including:

a processor; and

a memory for storing processor-executable instructions;

the processor is configured to read the executable instructions from the memory and execute the instructions to implement any one of the methods for detecting the pose of a scanning head provided by the present disclosure.

According to one or more embodiments of the present disclosure, a provided is a computer-readable storage medium having stored a computer program, which is configured to execute any one of the methods for detecting the pose of a scanning head provided by the present disclosure.

The description above is only illustration about the preferred embodiments of the present disclosure and technical principles adopted. A person skilled in the art should understand that the scope of disclosure involved in the present disclosure is not limited to the technical solutions formed by specifically combining the technical features and should also cover other technical solutions formed by arbitrarily combining the technical features or equivalent features thereof without departing from the inventive concept. For example, technical solutions formed by mutually replacing the features and (but not limited to) the technical features with similar functions disclosed in the present disclosure.

In addition, although various operations are depicted in a specific order, this should not be understood as requiring that these operations be performed in the specific order shown or in sequential order. In certain environments, multi-task and parallel processing may be advantageous. Likewise, while several specific implementation details are included in the discussion above, these should not be construed as limiting the scope of the present disclosure. Certain features that are described in the context of individual embodiments can also be implemented in a single embodiment in a combination manner. Conversely, various features that are described in the context of a single embodiment can also be implemented in multiple embodiments individually or in any suitable sub-combination manner.

Although the subject matter has been described in language specific to structural features and/or methodological logic acts, it should be understood that the subject matter defined in the appended claims is not necessarily limited to the specific features or acts described above. Rather, the specific features and acts described above are merely exemplary forms for implementing the claims.

**Industrial Applicability**

The method for detecting the pose of a scanning head provided in the present disclosure includes: calculating a positional relationship between a scanning head coordinate system and a tracker coordinate system based on marker point data acquired by more than two tracking cameras, thereby improving the positioning precision and stability of the pose of a scanning head by a tracker, as well as the overall measurement precision of a scanning measurement system of the tracker. The method has strong industrial applicability.

**Claims**

1. A method for detecting the pose of a scanning head, comprising:

performing tracking scanning processing for marker points on an outer frame of a scanning head based on N tracking cameras to obtain three-dimensional coordinates of at least three valid marker points, wherein N is a positive integer greater than 2; and
performing calculation based on the three-dimensional coordinates of the at least three valid marker points and reference coordinates of each valid marker point in a frame coordinate system to obtain a rotation matrix and a translation vector for transforming a scanner coordinate system to a tracker coordinate system.

2. The method for detecting the pose of the scanning head as claimed in claim 1, wherein the performing tracking scanning processing for marker points on the outer frame of the scanning head based on N tracking cameras to obtain three-dimensional coordinates of at least three valid marker points comprises:

acquiring pixel coordinates and major semi-axes and minor semi-axes of the marker points based on an image collected by each tracking camera;

determining M pixel coordinate pairs from N pixel coordinates based on the major semi-axes and minor semi-axes, wherein M is a positive integer greater than 3; and

respectively reconstructing the M pixel coordinate pairs based on a preset triangular ranging principle to obtain three-dimensional coordinates of the at least three valid marker points.

3. The method for detecting the pose of the scanning head as claimed in claim 1 or 2, wherein the performing tracking scanning processing for marker points on the outer frame of the scanning head based on N tracking cameras to obtain three-dimensional coordinates of at least three valid marker points comprises:

acquiring pixel coordinates of the marker points and an angle between a marker point plane and a camera imaging plane based on an image collected by each tracking camera;

determining M pixel coordinate pairs from N pixel coordinates based on the angle, wherein M is a positive integer greater than 3; and

respectively reconstructing the M pixel coordinate pairs based on a preset triangular ranging principle to obtain three-dimensional coordinates of the at least three valid marker points.

4. The method for detecting the pose of the scanning head as claimed in any one of claims 1 to 3, further comprising:

acquiring scanning data based on the scanning head; and

performing calculation based on the scanning data, and the rotation matrix and the translation vector for transforming from the scanner coordinate system to the tracker coordinate system to obtain tracking scanning measurement data.

5. The method for detecting the pose of the scanning head as claimed in any one of claims 1 to 4, further comprising:

photographing, by the N tracking cameras, a calibrator including marker points or coded points from a plurality of positions and a plurality of poses to acquire multiple sets of first images, and selecting N camera calibration methods corresponding to the N tracking cameras along with the multiple sets of first images to calculate internal parameters and external parameters of the N tracking cameras;

photographing, by a scanning head camera, the calibrator comprising marker points or coded points from a plurality of positions to acquire multiple sets of second images, and selecting a camera calibration method corresponding to the scanning head camera along with the multiple sets of second images to calculate internal parameters and external parameters of the scanning head camera;

calculating a mathematical expression of a plurality of laser line emission planes in a scanning head coordinate system; and

calculating a rigid transformation relationship between an outer frame coordinate system of the scanning head and the scanning head coordinate system.

6. An apparatus for detecting the pose of a scanning head, comprising:

a scanning processing component, configured to perform tracking scanning processing for marker points on an outer frame of a scanning head based on N tracking cameras to obtain three-dimensional coordinates of at least three valid marker points, wherein N is a positive integer greater than 2; and

a calculation component, configured to perform calculation based on the three-dimensional coordinates of the at least three valid marker points and reference coordinates of each valid marker point in a frame coordinate system to obtain a rotation matrix and a translation vector for transforming a scanner coordinate system to a tracker coordinate system.

7. The apparatus for detecting the pose of the scanning head as claimed in claim 6, wherein the scanning processing component is configured to:

acquire pixel coordinates and major semi-axes and minor semi-axes of the marker points based on an image collected by each tracking camera;

determine M pixel coordinate pairs from N pixel coordinates based on the major semi-axes and minor semi-axes, wherein M is a positive integer greater than 3; and

respectively reconstruct the M pixel coordinate pairs based on a preset triangular ranging principle to obtain three-dimensional coordinates of the at least three valid marker points.

8. The apparatus for detecting the pose of the scanning head as claimed in claim 6 or 7, wherein the scanning processing component is configured to:

acquire pixel coordinates of the marker points and an angle between a marker point plane and a camera imaging plane based on an image collected by each tracking camera;

determine M pixel coordinate pairs from N pixel coordinates based on the angle, wherein M is a positive integer greater than 3; and

respectively reconstruct the M pixel coordinate pairs based on a preset triangular ranging principle to obtain three-dimensional coordinates of the at least three valid marker points.

9. An electronic device, comprising:

a processor; and

a memory for storing processor-executable instructions;

the processor is configured to read the executable instructions from the memory and execute the instructions to implement the method for detecting the pose of the scanning head as claimed in any one of claims 1 to 5.

10. A computer-readable storage medium, wherein the storage medium stores a computer program, which is configured to execute the method for detecting the pose of the scanning head as claimed in any one of claims 1 to 5.

Perform tracking scanning processing for marker points on an outer frame of a scanning head based on N tracking cameras to obtain three-dimensional coordinates of at least three valid marker points, wherein N is a positive integer greater than 2 — S101

Perform calculation based on the three-dimensional coordinates of the at least three valid marker points and reference coordinates of each valid marker point in a frame coordinate system to obtain a rotation matrix and a translation vector for transforming a scanner coordinate system to a tracker coordinate system — S102

**Fig. 1**

Photograph, by a multi-view tracking camera, a calibrator including marker points or coded points from a plurality of positions and a plurality of poses to acquire multiple sets of first images, and select a corresponding multi-view camera calibration method along with the multiple sets of first images to calculate internal parameters and external parameters of the multi-view tracking camera — S201

Photograph, by a scanning head camera, the calibrator including marker points or coded points from a plurality of positions to acquire multiple sets of second images, and select a corresponding camera calibration method along with the multiple sets of second images to calculate internal parameters and external parameters of the scanning head camera — S202

Calculate a mathematical expression of a plurality of laser line emission planes in a scanning head coordinate system, and calculate a rigid transformation relationship between an outer frame coordinate system of the scanning head and the scanning head coordinate system — S203

Acquire pixel coordinates and major and minor semi-axes of the marker points based on an image collected by each tracking camera; determine M pixel coordinate pairs from N pixel coordinates based on the major and minor semi-axes, wherein M is a positive integer greater than 3; and respectively reconstruct the M pixel coordinate pairs based on a preset triangular ranging principle to obtain three-dimensional coordinates of the at least three valid marker points — S204

Acquire pixel coordinates of the marker points and an angle between a marker point plane and a camera imaging plane based on an image collected by each tracking camera; determine M pixel coordinate pairs from N pixel coordinates based on the angle, wherein M is a positive integer greater than 3; and respectively reconstruct the M pixel coordinate pairs based on a preset triangular ranging principle to obtain three-dimensional coordinates of the at least three valid marker points — S205

Perform calculation based on the three-dimensional coordinates of the at least three valid marker points and reference coordinates of each valid marker point in a frame coordinate system to obtain a rotation matrix and a translation vector for transforming a scanner coordinate system to a tracker coordinate system — S206

Acquire scanning data based on the scanning head, and perform calculation based on the rotation matrix and the translation vector for transforming from the scanner coordinate system to the tracker coordinate system to obtain tracking scanning measurement data — S207

**Fig. 2**

**Fig. 3**

| Scanning processing component 401 |
| :---: |
| Calculation component 402 |

**Fig. 4**

<u>500</u>

**Fig. 5**

**EP 4 614 444 A1**

## INTERNATIONAL SEARCH REPORT

| International application No. |
|---|
| **PCT/CN2023/133185** |

**A. CLASSIFICATION OF SUBJECT MATTER**

G06T 7/73(2017.01)i; G06T7/80(2017.01)i

According to International Patent Classification (IPC) or to both national classification and IPC

**B. FIELDS SEARCHED**

Minimum documentation searched (classification system followed by classification symbols)

IPC: G06T,G01B

Documentation searched other than minimum documentation to the extent that such documents are included in the fields searched

Electronic data base consulted during the international search (name of data base and, where practicable, search terms used)

CNABS, CNTXT, USTXT, WOTXT, EPTXT, IEEE, CNKI: 编码点, 标定, 标志点, 传感, 激光, 镜头, 三维, 扫描, 摄像, 摄影机, 相机, 像机, 坐标, camera, ccd, cemera, cmos, calibtat+, mark point, coding points, scan, laser, 3D, coordinate

**C. DOCUMENTS CONSIDERED TO BE RELEVANT**

| Category* | Citation of document, with indication, where appropriate, of the relevant passages | Relevant to claim No. |
|---|---|---|
| PX | CN 115984371 A (HANGZHOU TENYOUN 3D DETECTION TECHNOLOGY CO., LTD.) 18 April 2023 (2023-04-18) claims 1-10 | 1-10 |
| X | US 2022207765 A1 (ZG TECHNOLOGY CO., LTD.) 30 June 2022 (2022-06-30) description, paragraphs 0014-0088, and figures 1-4 | 1-10 |
| Y | CN 108759669 A (WUHAN ZHONGGUAN AUTOMATION TECHNOLOGY CO., LTD.) 06 November 2018 (2018-11-06) description, paragraphs 0056-0113 | 1-10 |
| Y | CN 114037768 A (TENYOUN 3D (TIANJIN) TECHNOLOGY CO., LTD) 11 February 2022 (2022-02-11) description, paragraphs 0021-0084, and figure 7 | 1-10 |
| A | CN 108151671 A (HANGZHOU SHINING 3D TECH CO., LTD.) 12 June 2018 (2018-06-12) entire document | 1-10 |
| A | CN 111932565 A (SHENYANG INSTITUTE OF AUTOMATION, CHINESE ACADEMY OF SCIENCES) 13 November 2020 (2020-11-13) entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 January 2024** | **02 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/133185**

| Patent document cited in search report | | | Publication date (day/month/year) | Patent family member(s) | | | Publication date (day/month/year) |
|---|---|---|---|---|---|---|---|
| CN | 115984371 | A | 18 April 2023 | None | | | |
| US | 2022207765 | A1 | 30 June 2022 | DE | 102021112880 | A1 | 30 June 2022 |
| | | | | US | 11587252 | B2 | 21 February 2023 |
| CN | 108759669 | A | 06 November 2018 | None | | | |
| CN | 114037768 | A | 11 February 2022 | None | | | |
| CN | 108151671 | A | 12 June 2018 | WO | 2018103152 | A1 | 14 June 2018 |
| CN | 111932565 | A | 13 November 2020 | None | | | |

Form PCT/ISA/210 (patent family annex) (July 2022)

**EP 4 614 444 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211489992X